# EUROPÄISCHE PATENTANMELDUNG

(11) **EP 3 885 404 A1**
(43) Veröffentlichungstag der Anmeldung: **29.09.2021**
(21) Anmeldenummer: 20164802.9
(22) Anmeldetag: 23.03.2020
(51) Int. Cl.: C08K 9/10, C09J 5/00, C09J 5/02

(54) **VERWENDUNG VON MISCHUNGEN ÄTHERISCHER ÖLE ZUR AUFTRENNUNG VON KLEBUNGEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Verwendung eines Trennmediums, enthaltend mindestens ein ätherisches Öl oder bestehend aus mindestens einem ätherischen Öl, zur Trennung von mindestens zwei durch eine Klebung miteinander verbundenen Fügeteilen.

## Beschreibung

In vielen Industriezweigen, insbesondere in der metallverarbeitenden Industrie wie z. B. der Fahrzeugindustrie, im Nutzfahrzeugbau sowie deren Zulieferindustrien oder auch bei der Herstellung von Maschinen und Haushaltsgeräten oder auch in der Bauindustrie werden zunehmend gleiche oder verschiedene metallische und nicht-metallische Substrate klebend bzw. abdichtend miteinander verbunden. Diese Art des Fügens von Bauteilen ersetzt im zunehmenden Maße die klassischen Fügeverfahren wie Nieten, Schrauben oder Schweißen, weil das Kleben/Abdichten eine Vielzahl von technologischen Vorteilen bietet. Im Gegensatz zu den traditionellen Fügeverfahren wie Schweißen, Nieten, Schrauben ist das Lösen und Separieren von geklebten Bauteilen vielfach noch nicht befriedigend gelöst.

Die EP-A-735121 beschreibt einen Klebfolien-Abschnitt für eine rückstandsfreie und beschädigungslose und wieder lösbare Verklebung bestehend aus einer dop- pelseitig klebenden Klebefolie mit einem aus der Klebefolie herausragenden An- fasser, an dem durch Ziehen in Richtung der Verklebungsebene die Verklebung lösbar ist. Dieses Verfahren ist jedoch nur anwendbar, wenn die Klebstoffschicht der Klebefolie ein Haftklebstoff ist. Mit derartigen Klebeverbindungen lassen sich jedoch nur geringe Zug- bzw. Schälfestigkeiten erreichen, so dass dieses Verfahren nur zum Fixieren von kleinen Gegenständen wie Haken und dergleichen im Haushaltsbereich anwendbar ist.

Die DE-A-42 30 116 beschreibt eine Klebstoffzusammensetzung enthaltend eine Abmischung eines aliphatischen Polyols mit einem aromatischen Dianhydrid. Diese Klebstoffzusammensetzung ermöglicht ein Auflösen der Verklebung in wässrig alkalischen Systemen, konkret genannt werden Sodalösungen oder Alkalilaugen. Es wird vorgeschlagen, diese wässrig alkalisch löslichen Klebstoffe zur rationellen Herstellung von Magnetteilen und anderen Kleinteilen zu verwenden, wobei der Klebstoff nur zur Herstellung von Hilfsklebungen bei der Materialbearbeitung verwendet werden soll. Sehr ähnliche Klebstoffe sind auch als Etikettierklebstoffe bekannt, die ein Ablösen der Etiketten im wässrigen oder wässrig alkalischen Milieu bei Getränkeflaschen und ähnlichen Gebinden erlauben.

Die DE-A-43 28 108 beschreibt einen Kleber für Bodenbeläge und ein Verfahren zum Lösen dieser verklebten Bodenbeläge mit Hilfe von Mikrowellenenergie. Dazu soll der Kleber elektrisch leitfähig sein und durch ein Mikrowellengerät erweichbar sein. Konkret vorgeschlagen werden lösungsmittelfreie Kontaktkleber auf Basis von (wässrigen) Polymerdispersionen, die Kupferpulver oder Aluminiumpulver enthalten. Gemäß der Lehre dieser Schrift sollen die verklebten Bodenbelagsstücke zum Lösen der Klebeverbindung in ein Mikrowellengerät gelegt werden, damit die Klebeschicht erweicht werden kann, so dass man die Bodenbelagsstücke nach dem Erweichen der Kleberschicht manuell abziehen kann.

Die WO 94/12582 beschreibt einen Haftkleber auf der Basis einer Mischung aus einer wässrigen Polymerdispersion und einem in einem organischen Lösungsmittel gelösten Klebstoff sowie Klebrigmachern und Verdickungsmitteln. Dieser Haftklebstoff hat in einem breiten Temperaturbereich eine konstante Klebkraft und ermöglicht das mechanische Trennen der Klebeverbindungen. Angegeben wird, dass sich diese Klebeverbindungen zum Verkleben von Dämm- und/oder Zierflächen- teilen wie z. B. Dämm-Materialien oder Kunststoff-Folien eignen.

Die DE-A-195 26 351 beschreibt ein Lösegel für Lacke, Farben und Kleber auf der Basis organischer Lösungsmittel unter Zusatz von Netz- Verdickungs- und anderen üblichen Mitteln. Als konkretes Anwendungsfeld werden die Verwendung als Abbeizmittel bei der Entschichtung von 2 K-Lacken genannt. Obwohl erwähnt wird, dass derartige Mischungen auch zum Einsatz bei 2 K-Klebern geeignet seien, fehlen jedwede konkreten Angaben zum Lösen derartiger Klebeverbindungen.

In ähnlicher Weise beschreibt die WO 87/01724 eine Zusammensetzung zur Entfernung von ausgehärteten Polysulfiddichtstoffen oder Beschichtungen. Hierbei wer- den in einem Lösungsmittel oder Lösungsmittelgemisch bestehend aus Dimethylformamid oder Dimethylacetamid oder deren Mischung mit aromatischen Lösungsmitteln wie Toluol oder Xylol ein Alkalimetall- oder Amoniumthiolat auf der Basis von Alkyl- oder Phenylthiolaten gelöst und auf ausgehärtete Polysulfiddichtstoffe oder Beschichtungsmaterialien aufgetragen, um diese anschließend von ihren Substraten, wie z. B. Flugzeugtanks entfernen zu können. Angaben zum Lösen von Klebeverbindungen werden nicht gemacht.

In der Arbeit "Reversible Crosslinking in Epoxy Resins", Journal of Applied Polymer Science, 39, 1439 bis 1457 (1990) beschreiben V. R. Sastri und G. C. Tesoro Epoxyharze mit verschiedenen Epoxyäquivalenten, die mit 4,4'-Dithioanilin vernetzt sind. Dort wird vorgeschlagen, das vernetzte Harz zu 600 µm großen Teilchen zu malen. Dieses feingemahlene Pulver wird dann in einer Lösung aus Diglyme, Salzsäure und Tributylphosphin unter Rückfluss gekocht, bis das gemahlene Harz aufgelöst ist. Analoge Offenbarungen werden in der US-A-4,882,399 von den gleichen Autoren gemacht. Konkrete Angaben über lösbare Klebeverbindungen fehlen in beiden Dokumenten.

Die WO 99/07774 beschreibt Klebstoffe, bei denen zumindest eine Aufbaukompo- nente Di- oder Polysulfidbindungen enthält und die nach dem Aushärten durch Auftragen von Lösungen von Spaltungsagenzien auf der Basis von Mercaptover- bindungen wieder gelöst werden können. Dadurch wird es möglich, verklebte Bauteile auf chemischem Wege in der Klebfuge wieder zu trennen. Gemäß der Lehre dieser Schrift kann das Spaltungsagenz auch in einer bei Raumtemperatur inerten Form der Klebstoff-Formulierung zugemischt werden, wobei die Spaltung nach Aktivierung des Reagenzes bei erhöhter Temperatur erfolgen kann. Konkrete Ausbildungen dieser inerten Form des Spaltungsagenzes werden nicht genannt.

EP 2 668 226 B1 offenbart ein Trennmedium für Mehrschichtsysteme, welches aus einer nanoskaligen Dispersion besteht, die eine organische Komponente, eine wässrige Komponente sowie ein Tensid enthält. Das Verfahren zielt auf das Recycling von Photovoltaikmodulen ab.

Die DE-A-199 24 138 beschreibt Klebstoffzusammensetzungen, die im Bindemittelsystem nanoskalige Teilchen mit ferromagnetischen, ferrimagnetischen, superparamagnetischen oder piezoelektrischen Eigenschaften enthalten. Diese Klebstoffzusammensetzungen eignen sich dazu, für die Herstellung lösbarer Klebeverbindungen verwendet zu werden. Unter Einwirkung elektromagnetischer Strahlung lassen sich diese Klebstoffverbindungen so hoch erwärmen, dass die Klebeverbindung leicht lösbar ist.

Die DE-A-35 01 490 beschreibt eine in den Rahmen einer Autokarosserie einge- klebte Glasscheibe unter Verwendung eines elastomeren vernetzten Klebers. Diese Scheibe hat auf ihrer Oberfläche im Klebebereich einen mit Stromanschlüssen versehenen Leitstreifen, der auf seiner dem Kleber zugewandten Seite eine Trennschicht aus einem thermisch schmelzbaren Material wie Weichlot oder Thermoplast trägt. Zum Lösen der Klebeverbindung wird der Leitstreifen unter Strom gesetzt, er erwärmt sich, die Trennschicht schmilzt und die Scheibe lässt sich von der Karosserie lösen.

Die EP-A-0521825 beschreibt eine lösbare Klebeverbindung, bei welcher die mit- einander verbundenen Teile mittels einer dazwischen eingebrachten Kleberaupe gefügt sind. Diese Kleberaupe enthält ein flächiges thermoplastisches Trennele- ment. Dieses thermoplastische Trennelement enthält intrinsisch leitfähige Polymere, elektrisch leitfähige Ruße, Graphit, Metallpulver, Metallfasern oder Metallnadeln, metallbeschichtete Füllstoffe, metallbeschichtete Mikroglaskugeln, metall- beschichtete Textilfasern oder Gemische dieser Materialien. Beim Erwärmen der Klebeverbindung durch Strom oder Strahlungszufuhr wird diese thermoplastische Trennschicht erweicht, so dass die miteinander verbundenen Anteile mechanisch voneinander getrennt werden können. Konkret schlägt die EP-A-521825 vor, der- artige lösbare Klebeverbindungen bei der Direktverglasung im Fahrzeugbau ein- zusetzen.

Ein weiterer Bereich bei dem das Lösen und Separieren von geklebten Fügeteilen vielfach noch nicht befriedigend gelöst ist sind sogenannte Mehrschichtverbunde.

Mehrschichtverbunde, beispielsweise verwendet für das Verpacken von Lebensmitteln bestehen aus wenigstens zwei flächig miteinander verbundenen Folienschichten. Die Folien sind beispielsweise Polymerfolien, erzeugt aus Polyethylen-, Polypropylen-, Polyester- und Polyamid, oder Aluminiumfolien oder sie bestehen aus Papier- oder Pflanzenfasern.

Mehrschichtverbunde enthalten in der Regel eine Schicht Druckfarbe, die im Frontaldruck oder im Konterdruck (https://roempp.thieme.de/roempp4.0/do/data/RD-06-01930) auf den Polymerfolien aufgetragen sein kann. Auch können die Polymerfolien mit Aluminium bedampft sein. Im Rahmen der vorliegenden Erfindung werden mit Druckfarbe versehene oder mit Aluminium bedampfte Polymerfolien als eine einzige Schicht betrachtet.

In der Regel werden für die Lebensmittelverpackung 2-lagige (Duplex-Verbunde) oder 3-lagige (Triplex-Verbunde) eingesetzt. Es sind aber auch Mehrschichtverbunde mit mehr als drei Schichten möglich.

In vielen Fällen werden die verschiedenen Schichten mittels eines Klebstoffpolymers miteinander flächig verbunden. Dazu kommen in der Regel 1-komponentige oder 2-komponentige Polyurethan-Klebstoffpolymere zur Anwendung, die als lösemittelfreier, lösemittelhaltiger oder wässriger Klebstoff auf mindestens eine der jeweils zu verbindenden Schichten aufgetragen werden, bevor die zu verbindenden Schichten miteinander verbunden werden. Das Auftragsgewicht der Klebstoffpolymere zwischen zwei jeweils zu verbindenden Schichten liegt je nach Art des Klebstoffs zwischen 0,5g/m² und 5g/m². Etwaig in dem Klebstoff vorhandenes Lösemittel bzw. Wasser sind hierbei nicht eingerechnet. Auch Haftvermittler, beispielsweise auf Polyurethanbasis, können analog zum Einsatz kommen. Dies ist beispielsweise oft bei co-extrudierten Polymeren der Fall, wie den oben genannten co-extrudierten Polyolefinfolien mit Etylenvinylalkohol-Innenschicht. Der Klebstoff- bzw. Haftvermittler wird nicht als Schicht betrachtet.

Die Vorteile der Mehrschichtverbunde für das Verpacken von Lebensmitteln -im Vergleich zu anderen Verpackungsarten wie zum Beispiel Glas- oder Metallverpackungen - sind neben den geringen Kosten und dem geringen Gewicht auch der geringe Platzbedarf der verpackten Lebensmittel.

Die Mehrschichtverbunde besitzen jedoch den Nachteil, dass sie nach dem Verbrauch des Lebensmittels nur schwer wieder in die einzelnen Folienschichten getrennt werden können. Das Auftrennen in die Einzelschichten ist jedoch sinnvoll, damit die Polymere bzw. das Aluminium wieder sortenrein in den Wertstoffkreislauf zurückgeführt werden können.

Das Deutsche Verpackungsgesetz schreibt für Kunststoffverpackungen ab 2022 eine Recyclingquote von 63% vor. Dabei ist es sinnvoll, wenn das Recycling zu möglichst hochwertigen und sortenreinen Kunststoffen führt. Um die sortenreine Sortierung der einzelnen Folienschichten zu ermöglichen, müssen die Schichten voneinander getrennt werden. Die Trennung der Schichten ist jedoch nicht trivial, weil die vernetzten Klebstoffpolymere nur eine geringe Löslichkeit besitzen.

Inzwischen wurden bereits spezielle Trennverfahren entwickelt, die für einzelne Folienkombinationen oder Kunststoffe eingesetzt werden können.

So offenbart das Patent EP 0 543 302 B1 ein Verfahren für die Trennung von Aluminiumfolie und Polyethylen- oder Polyesterfolie unter Einwirkung von Fettsäuren und in einem geschlossenen Behälter bei 100°C bis 122°C.

Ein Nachteil dieser Erfindung ist der Umstand, dass nur ausgewählte Folienkombinationen getrennt werden können. Der Einsatz für die Trennung aller Mehrschichtverbunde, die für die Lebensmittelverpackung zum Einsatz kommen, ist mit diesem Verfahren nicht möglich.

WO 2015/000681 A1 beschreibt ein lösemittelbasiertes Kunststoff-Recycling-Verfahren, mit dem die Polymere aus Kunststoffabfällen zurückgewonnen werden können. Das Verfahren basiert auf der Mitverwendung von Thermostabilisatoren in einem paraffinischen Kohlenwasserstoffgemisch. Das bei erhöhter Temperatur in dem Kohlenwasserstoffgemisch gelöste Polymer fällt beim Abkühlen aus. Das Polymer wird mechanisch abgetrennt und der im Polymer vorhandene Kohlenwasserstoffgemisch durch Anlegen von Vakuum z.B. in einem Entgasungsextruder entfernt. Der Thermostabilisator verhindert den Polymerabbau des gelösten Polymers. Das gewonnene Polymer enthält 50 - 1000ppm des Kohlenwasserstoffgemischs.

US 2017/0080603 A1 beschreibt ein Verfahren zur Auftrennung von Verpackungsmaterialien, wobei die Trennflüssigkeit eine Carbonsäure und ein Quellmittel umfasst, wobei es sich bei Letzterem um ein Kohlenwasserstofflösungsmittel handelt, wie Toluol, Xylol, Ethylbenzol, Cyclohexan oder Decalin, wie Olefine, Terpene, Ketone, Ether oder Ester.

Es besteht somit weiterhin ein Bedarf nach alternativen Verfahren zur Trennung von durch Klebungen miteinander verbundenen Fügeteilen, welche die Nachteile des Standes der Technik nicht aufweisen.

Das Verfahren soll möglichst ohne die Mitverwendung von Gefahrstoffen bzw. leicht entzündlichen Stoffen möglich sein, es soll zerstörungsfrei in Bezug auf die Fügeteile sein und eine möglichst effektive, d.h. vollständige Trennung der Fügeteile bewirken.

Gelöst wurde die Aufgabe durch die Verwendung eines Trennmediums, welches wenigstens ein ätherisches Öl enthält, zur Trennung von durch Klebungen miteinander verbundenen Fügeteilen.

Gegenstand der vorliegenden Erfindung ist die Verwendung eines Trennmediums, enthaltend mindestens ein ätherisches Öl oder bestehend aus mindestens einem ätherischen Öl, zur Trennung einer Fügeteileanordnung, enthaltend oder bestehend aus
i) 2 Fügeteile/n, die durch einen Klebstoff oder eine Klebstoffmischung miteinander verbunden sind, oder
ii) mehr als 2 Fügeteile/n, die dadurch miteinander verbunden sind, dass sich zwischen 2 benachbarten Fügeteilen jeweils ein Klebstoff oder eine Klebstoffmischung befindet, wobei die jeweils zwischen 2 miteinander verbundenen benachbarten Fügeteilen vorhandenen Klebstoffe bzw. Klebstoffmischungen gleich oder unterschiedlich sein können.

Ein weiterer Gegenstand der vorliegenden Erfindung ist ein Verfahren zum Trennen einer Fügeteileanordnung, enthaltend oder bestehend aus
i) 2 Fügeteile/n, die durch einen Klebstoff oder eine Klebstoffmischung miteinander verbunden sind, oder
ii) mehr als 2 Fügeteile/n, die dadurch miteinander verbunden sind, dass sich zwischen 2 benachbarten Fügeteilen jeweils ein Klebstoff oder eine Klebstoffmischung befindet, wobei die jeweils zwischen 2 miteinander verbundenen benachbarten Fügeteilen vorhandenen Klebstoffe bzw. Klebstoffmischungen gleich oder unterschiedlich sein können,
durch Behandlung mit einem Trennmedium, enthaltend mindestens ein ätherisches Öl oder bestehend aus mindestens einem ätherischen Öl.

Bevorzugt sind in Ausführungsform ii) die jeweils zwischen 2 miteinander verbundenen benachbarten Fügeteilen vorhandenen Klebstoffe bzw. Klebstoffmischungen gleich.

Unter einer Klebstoffmischung werden im Sinne der vorliegenden Erfindung 2 oder mehrere Klebstoffe verstanden. Diese können miteinander vermischt sein oder nicht vermischt sein. Bei 3 oder mehr Klebstoffen ist es auch möglich, dass ein Teil der Klebstoffe vermischt und der restliche Teil der Klebstoffe unvermischt ist. Dies wäre beispielsweise der Fall bei einer Klebstoffschicht, die dadurch erhalten wurde, dass zunächst ein einzelner Klebstoff auf ein Fügeteil aufgetragen wurde, auf den dann zwei miteinander vermischte Klebstoffe aufgetragen wurden, bevor das zweite Fügeteil auf der so erhaltenen Klebstoffschicht verklebt wurde.

Eine Klebung ist definiert nach EN 923 (**Deutsche Fassung EN 923:2015**) als eine mit Klebstoff hergestellte Verbindung zwischen Fügeteilen.

Ein Klebstoff ist ein nichtmetallischer Stoff, der in der Lage ist, Werkstoffe durch Oberflächenhaftung (Adhäsion) und seine innere Festigkeit (Kohäsion) zu verbinden. Es handelt sich also um einen Prozesswerkstoff, der erst durch eine (physikalische oder chemische) Abbindereaktion während der Fertigung seine mechanische Festigkeit ausbildet und der beim Fügeverfahren Kleben zum Verbinden verschiedener Fügeteile verwendet wird.

Unter Fügeteilen versteht zwei oder mehr Werkstücke (mit geometrisch bestimmter Form oder formlose Stoffe), die auf Dauer miteinander verbunden sind. Ein Fügeverfahren ist entsprechend ein Verfahren, das dazu dient Werkstücke auf Dauer miteinander zu verbinden.

Bei der Herstellung einer Klebung kann zur Verbesserung der Adhäsion und/oder der Beständigkeit einer Klebung vor dem Klebstoffauftrag auf den Werkstückoberflächen mindestens ein Vorstrich (beispielsweise ein Primer, Haftvermittler oder Grundiermittel) aufgebracht werden.

Grundiermittel werden auf die Oberfläche eines Fügeteils vor dem Klebstoffauftrag aufgebracht, vorrangig um die Aufnahmefähigkeit (Absorptionsvermögen) des Fügewerkstoffs zu vermindern.

Primer bzw. Haftvermittler werden vor dem Klebstoffauftrag vorrangig zur Verbesserung der Adhäsion und/oder der Beständigkeit einer Klebung auf eine Fügeteiloberfläche aufgebracht Primer, Haftvermittler, Grundiermittel können nach dem Auftragen chemisch oder physikalisch abbinden.

In der weiteren Beschreibung bezieht sich Vorstrich, Primer, Grundiermittel, Haftvermittler sowohl auf den Zustand vor als auch auf den Zustand nach dem Abbinden (Vorgang, bei dem ein Klebstoff seine Kohäsionsfestigkeit gewinnt und die Klebung ihre physikalischen und chemischen Eigenschaften entwickelt).

Als Trennmedium kann das ätherische Öl oder die Mischung von ätherischen Ölen selbst, eine einphasige Mischung des ätherischen Öls bzw. der Mischung von ätherischen Ölen mit anderen Substanzen oder eine mehrphasige Zusammensetzung enthaltend das ätherische Öl, beispielsweise eine wässrige Emulsion des ätherischen Öls oder der Mischung von ätherischen Ölen verwendet werden.

Bevorzugt besteht das Trennmedium aus einer wässrigen Emulsion des ätherischen Öls oder der Mischung von ätherischen Ölen.

In einer weiteren bevorzugten Ausführungsform enthält das Trennmedium eine wässrige Emulsion des ätherischen Öls oder der Mischung von ätherischen Ölen. Bevorzugt enthält das Trennmedium bei dieser Ausführungsform keine Carbonsäure.

Bevorzugt wird eine wässrige Emulsion in das Verfahren eingesetzt, die > 0,1 Volumen-%, besonders bevorzugt ≥ 0,5 Volumen -%, ganz besonders bevorzugt ≥ 1 Volumen -%, noch mehr bevorzugt ≥ 10 Volumen -% an ätherischem Öl bzw. an ätherischen Ölen, bezogen auf das eingesetzte Volumen an Wasser, enthält.

Unter ätherischen Ölen sind Verbindungen aus den Verbindungsklassen der acyclischen und cylischen Mono- und Sesquiterpene und aromatischen Verbindungen, wie Phenole, Phenylpropanoide und Furanocumarine zu verstehen. Beispielhaft seien genannt Ocimen, Myrcen, Limonen, α-Terpinen, Phellandren, α-Pinen, Camphen, Linalool, Geraniol, Menthol, Sabinol, Borneol, Neral, Citronellal, Carvon, Menthon, Campher, Fenchon, Menthofuran, Cineol, Anethofuran, Geranylacetat, Linalylacetat, Essigsäurebornylester, Isobornylacetat, Farnesol, Farnesen, α-Bisabolol, α-Caryophyllen, Chamazulen, β-Caryophyllen, Carveol, Carvacrol, Thymol, Apiol, Trans-Zimtsäuremethylester, Cis- und Trans-Anethol, Dillapiol, Estragol, Eugenol, Coriandrin.

Die ätherischen Öle können natürlichen Ursprungs sein, d.h. aus Pflanzen oder Pflanzenteilen gewonnen werden, oder synthetisch hergestellt werden.

Das ätherische Öl kann auch durch Oxidation, Veresterung oder Alkylierung chemisch verändert sein.

Unter den ätherischen Ölen sind insbesondere die Verbindungen der Stoffgruppe der Phenylpropanoide geeignet.

Ganz besonders geeignet ist die Verbindung Eugenol.

In einer bevorzugten Ausführungsform enthält die wässrige Emulsion ≥ 0,5 Volumen-%, bevorzugt ≥ 0,9 Volumen-% einer Mischung an ätherischen Ölen, bezogen auf das eingesetzte Volumen an Wasser, wobei der Volumenanteil an Eugenol in der Mischung der ätherischen Öle wenigstens (≥) 1/3 beträgt.

Durch Zusatz von oberflächenaktiven Substanzen z.B. Tensiden, Emulgatoren zu der Mischung aus Wasser und ätherischem/en Öl/en kann die Effektivität des Verfahrens gesteigert werden.

In einer anderen Ausführungsform enthält das Trennmedium neben mindestens einem ätherischen Öl mit diesem mischbare Substanzen wie Lösemittel oder Weichmacher.

Das Trennmedium kann zur Trennung von miteinander durch Klebstoffe verbundenen Fügeteilen aus verschiedenen Materialien angewendet werden, wobei die Fügeteile aus unterschiedlichen oder gleichen Materialien bestehen können.

Als Materialien zur Herstellung der Fügeteile eignen sich beispielsweise Kunststoffe, organische Materialien, Holz, Papier, Metalle, sowie mineralische Stoffe wie Beton oder Gips.

Die Fügeteile können beispielsweise in Form von Folien, Platten, Schäumen vorliegen, oder komplexe dreidimensionale Formen haben.

Die Fügeteile können flächig, kantig oder punktuell miteinander verbunden sein.

Beispiele für Materialien, die unter Verwendung des Trennmediums getrennt werden können sind Mehrschichtverbundmaterialien, mit Folien kaschierte Formteile wie Möbelteile, Zierteile für den Autoinnenraum (interoir trim Teile).

Bei der Auswahl der Klebstoffe steht dem Fachmann eine große Zahl von unterschiedlichen Typen zur Verfügung. Die zur Verbindung der Fügeteile eingesetzten Klebstoffe können aus unterschiedlichen chemischen Grundprodukten aufgebaut sein. Beispiele von geeigneten Klebstoffen sind in Kapitel 2.3 der EN 923 (Deutsche Fassung EN 923:2015), dem Buch "Kleben" von G. Habenicht, 5. Auflage (ISBN 3-540-26273-3) 2005, Springer Verlag genannt. Insbesondere werden Polyurethanklebstoffe, ganz besonders bevorzugt Polyurethanklebstoffe mit Polyestergruppen eingesetzt.

Bei der Herstellung einer Klebung kann ein Vorstrich (Primer, Haftvermittler und/oder Grundiermittel) vor dem Klebstoffauftrag auf mindestens eine Fügeteiloberfläche aufgebracht werden. Die ggf. verwendeten Vorstriche können aus den gleichen chemischen Grundprodukten aufgebaut sein wie die Klebstoffe. Beispielsweise können als Vorstriche Silan-basierte Vorstriche oder Polyurethan-basierte Vorstriche, wie Silanprimer oder Polyurethan-Primer, eingesetzt werden. Bevorzugt werden Polyurethan-basierte Vorstriche eingesetzt.

Die bei einer Klebung verwendeten Vorstriche können aus den gleichen oder aus verschiedenen chemischen Grundprodukten aufgebaut sein wie der/die bei der Klebung eingesetzte/n Klebstoff/e. Bevorzugt unterscheiden sich der/die Vorstrich/e und der/die Klebstoff/e hinsichtlich ihrer chemischen Aufbaukomponenten.

Polyurethan-basierte Vorstriche bzw. Klebstoffe sind im Stand der Technik ausführlich beschrieben, so beispielsweise in Manufacturing Flexible Packaging, Thomas Dunn, ISBN 978-0-323-264-36-5, Ulrich Meier Westhues; Polyurethane, Lacke, Kleb- und Dichtstoffe, ISBN 978-3-86630-896-1. Diese Auflistung ist nicht einschränkend zu werten.

In einer besonderen Ausführungsform kann der/die verwendete/n Klebstoff/e bzw. Vorstrich/e das Trennmedium bereits enthalten, ohne dass das Trennmedium mit dem/den Klebstoff/en bzw. Vorstrich/en in Kontakt kommt. Beispielsweise kann der/die Klebstoff/e bzw. Vorstrich/e das Trennmedium in verkapselter, bevorzugt mikroverkapselter Form enthalten.

Weitere Gegenstände der vorliegenden Erfindung sind die Verwendung bzw. das Verfahren wie zuvor beschrieben, dadurch gekennzeichnet, dass
im Falle der Ausführungsform i) der eine Klebstoff ein Polyurethanklebstoff, bevorzugt ein Polyestergruppen enthaltender Polyurethanklebstoff ist, bzw. die Klebstoffmischung mindestens einen Polyurethanklebstoff, bevorzugt mindestens einen Polyestergruppen enthaltenden Polyurethanklebstoff, enthält,
im Falle der Ausführungsform ii) wenigstens einer der Klebstoffe ein Polyurethanklebstoff, bevorzugt ein Polyestergruppen enthaltender Polyurethanklebstoff ist, und/oder wenigstens eine der Klebstoffmischungen einen Polyurethanklebstoff, bevorzugt ein Polyestergruppen enthaltender Polyurethanklebstoff, enthält.

Der sich zwischen zwei Fügeteilen befindende Klebstoff bzw. die sich zwischen zwei Fügeteilen befindende Klebstoffmischung wird im Rahmen der vorliegenden Erfindung auch als Klebstoffschicht bezeichnet. Unter einer Klebstoffschicht wird im Rahmen der vorliegenden Erfindung beispielsweise der flächige, kantige und/oder punktuelle Auftrag des Klebstoffs oder des Klebstoffgemischs auf das bzw. die Fügeteil/e verstanden.

Weitere Gegenstände der vorliegenden Erfindung sind auch die Verwendung bzw. das Verfahren wie zuvor beschrieben, dadurch gekennzeichnet, dass zwischen mindestens einem Fügeteil und mindestens einer Klebstoffschicht sich zusätzlich mindestens 1 Vorstrich befindet, bevorzugt ein Silan-basierter Vorstrich und/oder ein Polyurethan-basierter Vorstrich.

Darüber hinaus sind weitere Gegenstände der vorliegenden Erfindung die Verwendung bzw. das Verfahren wie zuvor beschrieben, dadurch gekennzeichnet, dass mindestens ein die Fügeteile verbindender Klebstoff bzw. eine die Fügeteile verbindende Klebstoffmischung und/oder mindestens ein zusätzlich enthaltender Vorstrich das Trennmedium in verkapselter, bevorzugt mikroverkapselter Form enthält.

### Beschreibung des Verfahrens:

Die zu trennenden Materialien werden mit dem Trennmedium für eine bestimmte Zeit in Kontakt gebracht, und zwar bevorzugt mindestens (≥) 30 Minuten, besonders bevorzugt mindestens (≥) 1 Stunde.

Durch diese Behandlung wird der Klebstoff und/oder der ggf. vorhandene Vorstrich soweit in seiner Festigkeit geschwächt, dass durch geringfügige mechanische Belastung (beispielsweise Scherbeanspruchung) die durch den Klebstoff verbundenen Fügeteile getrennt werden können.

Um die Effektivität des Verfahrens zu erhöhen, werden die Fügeteile gegebenenfalls zerkleinert, beispielsweise mittels einer Schneidemühle oder eines Schredders. Durch das Zerkleinern des Mehrschichtverbundes wird die durch die Kontaktfläche des Trennmediums mit dem Klebstoff bzw. dem Vorstrich vergrößert. Die Eindringwirkung des Trennmediums in die Klebstoff- bzw. Vorstrichschicht wird somit verbessert und die Schwächung der Klebstoff- bzw. Vorstrichschicht kann schneller erreicht werden.

Die zu trennenden Materialien können mit dem Trennmedium in Kontakt gebracht, beispielsweise in dem man die zu trennenden Materialien in das Trennmedium einbringt oder die zu trennenden Materialien mit dem Trennmedium bestreicht.

In einer besonderen Ausführungsform des Verfahrens ist in dem verwendeten Klebstoff bzw. Vorstrich das Trennmedium bereits enthalten, ohne dass das Trennmedium mit dem Klebstoff bzw. Vorstrich in Kontakt kommt. Beispielsweise kann der Klebstoff bzw. Vorstrich das Trennmedium in mikroverkapselter Form enthalten. In diesem Falle, wird das Trennmedium erst im Laufe des Verfahrens freigesetzt und in Kontakt mit dem Klebstoff- bzw. Vorstrich gebracht, in dem es aus der Verkapselung freigesetzt wird. Beispielsweise kann dies durch mechanische Beanspruchung oder Erwärmen geschehen.

Die Arbeitsweise ist in einem Batchprozess oder in einem kontinuierlichen Prozess möglich.

Nach der Behandlung mit dem Trennmedium werden die getrennten Materialien ggf. durch Sieben, durch Filtration oder durch Zentrifugieren von dem Trennmedium separiert. Noch aneinanderhaftende Materialien, die nach der Behandlung mit dem Trennmedium noch nicht vollständig voneinander gelöst sind, können mechanisch, z.B. durch ein scherendes Walzenpaar, voneinander getrennt werden.

Die Trennung der Materialien eine sortenreine Form kann durch die bekannten Trennverfahren z.B. Flotation, Aufschwimm- oder Absetzverhalten, durch Wirbelstrom (Abtrennen von Aluminium) erfolgen.

Anhaftendes ätherisches Öl kann entweder durch einen Waschprozess unter Mitverwendung geeigneter Tenside abgewaschen werden.

Nach ggf. durchgeführter Trocknung der separierten, gereinigten Materialien können diese wieder in den Wertstoffkreislauf zurückgeführt werden.

Ein weiterer Gegenstand der vorliegenden Erfindung ist eine Fügeteilanordnung, enthaltend oder bestehend aus
a)
   i) 2 Fügeteile/n, die durch einen Klebstoff oder eine Klebstoffmischung miteinander verbunden sind,
      oder
   ii) mehr als 2 Fügeteile/n, die dadurch miteinander verbunden sind, dass sich zwischen 2 benachbarten Fügeteilen jeweils ein Klebstoff oder eine Klebstoffmischung befindet, wobei die jeweils zwischen 2 miteinander verbundenen benachbarten Fügeteilen vorhandenen Klebstoffe bzw. Klebstoffmischungen gleich oder unterschiedlich sein können,
   wobei bei Ausführungsform i) und ii) gegebenenfalls zwischen mindestens einem Fügeteil und mindestens einer Klebstoffschicht sich zusätzlich mindestens 1 Vorstrich befindet, bevorzugt ein Silan-basierter Vorstrich und/oder ein Polyurethan-basierter Vorstrich,
b) ein/einem Trennmedium in verkapselter, bevorzugt mikroverkapselter Form,
wobei das verkapselte Trennmedium in mindestens einem die Fügeteile verbindendem Klebstoff bzw. einer die Fügeteile verbindenden Klebstoffmischung und/oder gegebenenfalls in mindestens einem zusätzlich enthaltenen Vorstrich enthalten ist,
und das Trennmedium mindestens ein ätherisches Öl enthält oder aus einem ätherischen Öl besteht.

Ein weiterer Gegenstand der vorliegenden Erfindung ist auch eine Fügeteileanordnung gemäß vorangegangener Beschreibung, dadurch gekennzeichnet, dass das mindestens eine ätherische Öl ausgewählt ist aus der Gruppe bestehend aus acyclischen und cylischen Mono- und Sesquiterpenen, Phenolen, Phenylpropanoiden und Furanocumarinen.

### Beispiele

### Mehrschichtverbunde:

| | |
|---|---|
| Mehrschichtverbund 1: | Polyester/Druckfarbe//Aluminium//Polyethylen Verpackung Eduscho Espresso (Etikett: 29.06.2020 L9031 H57/2 08:56) |
| Mehrschichtverbund 2: | Polyester / Druckfarbe// Polyethylen Hundetrockenfutter "Minivita" von Josera |

Polyester und Druckfarbe werden zusammen als eine Schicht betrachtet.
// bedeutet Klebeschicht, basierend auf einem Polyurethankleber.

### Ätherische Öle:

Bezugsquelle für alle im Folgenden genannten Öle: Sigma-Aldrich, München)
Eugenol (CAS# 97-53-0) - Phenylpropanoid
Trans-Anethol (CAS# 104-46-1) (Phenylpropanoid)
Trans-Zimtsäuremethylester (CAS#: 1754-62-7) (Phenylpropaniod-Derivat)
Linalool (CAS# 78-70-6) -Monoterpen
Citronellal (CAS# 106-23-0) -Monoterpen

### Bestimmung der Verbundfestigkeit:

Die Verbundhaftung der Folienschichten wird mit der Zwick 5kN Allround table-top Prüfmaschine nach der DIN 55533-5 im 180°-Schälversuch bestimmt. Die angegebenen Werte sind die Mittelwerte aus fünf Einzelmessungen.

### Versuch 1: Visuelle Prüfung der Trennung (Tabelle 1)

Die Mehrschichtverbunde werden mit einer Schere in ca. 1cm² große Quadrate geschnitten. 10 Stücke der ca. 1cm² Mehrschichtverbunde werden in eine mit Ölbad beheizte 250ml Mehrhalskolbenrührapparatur mit Rührer, Thermometer und Rückflusskühler gegeben.

In die Rührapparatur werden 100ml Wasser bzw. 100ml Wasser mit 0,1ml, 0,5ml, 1ml, 10ml der ätherischen Öle gefüllt und auf Siedetemperatur erwärmt. Der Kolbeninhalt wird bis zu 20 Std. unter Rückfluss bei ca. 100°C gekocht. In 1-stündigen Abständen werden die Mehrschichtverbunde visuell auf Trennung geprüft.

### Mehrschichtverbund 1

**Tabelle 1**

| | 1 Std. | | 2 Std. | | 3 Std. | | 20 Std. | |
|---|---|---|---|---|---|---|---|---|
| | Alu//P ET | Alu//P E | Alu//P ET | Alu//P E | Alu//PE T | Alu//P E | Alu//PE T | Alu//PE |
| 100ml Wasser | - | - | - | - | - | - | - | - |
| +0,1% Eugenol | - | - | - | - | - | - | - | - |
| + 0,5% Eugenol | - | - | - | - | ⁻+ | ⁻+ | 0 | 0 |
| +1% Eugenol | -+ | -+ | + | + | ++ | ++ | 0 | 0 |
| +10% Eugenol | + | + | ++ | ++ | 0 | 0 | 0 | 0 |
| + 1% Trans-Anethol | 0 | 0 | 0 | 0 | - | ++ | 0 | 0 |
| +1% Trans-Zimtsäuremethylester | 0 | 0 | 0 | 0 | ++ | + | 0 | 0 |
| + 1% Linalool | 0 | 0 | 0 | 0 | - | -+ | 0 | 0 |
| 1 % Citronellal | 0 | 0 | 0 | 0 | - | + | 0 | 0 |
| + 0,33% Eugenol + 0,33% Trans-Anethol + 0,33% Trans-Zimtsäuremethylester | 0 | 0 | 0 | 0 | + | ++ | 0 | 0 |
| + 1% Eugenol + 1% Trans-Anethol + 1% Trans-Zimtsäuremethylester | 0 | 0 | 0 | 0 | ++ | ++ | 0 | 0 |

| | | | | | | | | |
|---|---|---|---|---|---|---|---|---|
| -: keine Änderung der Verbundhaftung / keine Trennwirkung sichtbar -+ : an den Schnittkanten Trennung der Schichten + : Delamination bereits flächig sichtbar ++: vollständige Delamination 0 : nicht geprüft % = Volumenprozent | | | | | | | | |

Sowohl bei den Terpenen als auch bei den Phenylpropanoiden tritt eine trennende Wirkung ein, wobei die Wirkung der Phenylpropanoide die der Terpene noch übertrifft. Der Zusatz von 1% Eugenol führt bereits nach 3 Stunden zu einer vollständigen Auflösung des Verbundes. In reinem Wasser ergibt sich auch nach 20 Stunden keine Trennung der Verbunde.

### Versuch 2: Bestimmung der Abnahme der Verbundfestigkeit der Folienschichten (Tabelle 2)

15mm breite und 20cm lange Streifen der Mehrschichtverbunde werden aus den Verpackungen herausgeschnitten. Die Streifen wurden in 100ml Wasser, bzw. in 100ml Wasser in Mischung mit 1ml Eugenol bzw. Trans-Anethol über 3 Std. am Rückfluss (p ∼ 1bar) in einem 250ml Mehrhalskolbenrührapparatur mit Rückflußkühler gekocht. Nach dem Kochen wurden die Streifen der Apparatur entnommen und innerhalb von 30 min. die Verbundhaftung gemessen. Die Verbundhaftung der Folienschichten wurde mit der Zwick 5kN Allround table-top Prüfmaschine nach der DIN 55533-5 im 180°-Schälversuch bestimmt. Die gelösten Enden an 15mm breite Streifen der Folienverbunde werden in die Befestigungsklammern der Zwick-Prümaschine eingespannt. Während der Messung werden die Prüfklammern mit der Geschwindigkeit 100mm/min. auseinandergezogen. Die angegebenen Werte sind die Mittelwerte aus fünf Einzelmessungen.

**Tabelle 2**

| nach 3 Std. | Verbund 1 | | Verbund 2 |
|---|---|---|---|
| | Alu//PET | Alu//PE | PET//PE |
| 100ml Wasser | 1,6 | F* | 2,2 |
| +1% Eugenol | 0,7 | 1,0 | 0,4 |
| + 1% Trans-Anethol | 0,4 | 0,6 | 0,5 |
| + 0,33% Eugenol + 0,33% Trans-Anethol + 0,33% Trans-Zimtsäuremethylester | 0,4 | 0,2 | / |
| + 1 % Eugenol + 1% Trans-Anethol + 1% Trans-Zimtsäuremethylester | <0,1 | 0,6 | / |

| | | | |
|---|---|---|---|
| % = Volumenprozent *: Folienverbund konnte nicht getrennt werden. Es kommt bei dem Versuch unmittelbar zum Abriss einer Folie | | | |

Die Schwächung der Klebstoffschicht durch die Phenylpropanoide ist offensichtlich. Die Verbundfestigkeit der Mehrschichtverbunde liegt nach der Behandlung mit der wässrigen Mischung deutlich niedriger als der nur mit Wasser behandelte Mehrschichtverbund.

## Patentansprüche

1. Verwendung eines Trennmediums, enthaltend mindestens ein ätherisches Öl oder bestehend aus mindestens einem ätherischen Öl, zur Trennung einer Fügeteileanordnung, enthaltend oder bestehend aus
ii) 2 Fügeteile/n, die durch einen Klebstoff oder eine Klebstoffmischung miteinander verbunden sind, oder
ii) mehr als 2 Fügeteile/n, die dadurch miteinander verbunden sind, dass sich zwischen 2 benachbarten Fügeteilen jeweils ein Klebstoff oder eine Klebstoffmischung befindet, wobei die jeweils zwischen 2 miteinander verbundenen benachbarten Fügeteilen vorhandenen Klebstoffe bzw. Klebstoffmischungen gleich oder unterschiedlich sein können.

2. Verfahren zum Trennen einer Fügeteileanordnung, enthaltend oder bestehend aus
ii) 2 Fügeteile/n, die durch einen Klebstoff oder eine Klebstoffmischung miteinander verbunden sind, oder
ii) mehr als 2 Fügeteile/n, die dadurch miteinander verbunden sind, dass sich zwischen 2 benachbarten Fügeteilen jeweils ein Klebstoff oder eine Klebstoffmischung befindet, wobei die jeweils zwischen 2 miteinander verbundenen benachbarten Fügeteilen vorhandenen Klebstoffe bzw. Klebstoffmischungen gleich oder unterschiedlich sein können,
durch Behandlung mit einem Trennmedium, enthaltend mindestens ein ätherisches Öl oder bestehend aus mindestens einem ätherischen Öl.

3. Verwendung gemäß Anspruch 1 oder Verfahren gemäß Anspruch 2, **dadurch gekennzeichnet, dass** das Trennmedium mindestens ein ätherisches Öl enthält und
a) als eine einphasige Mischung des mindestens einen ätherischen Öls mit mindestens einer anderen Substanz,
oder
b) als mehrphasige Zusammensetzung des mindestens einen ätherischen Öls mit mindestens einer anderen Substanz, vorzugsweise als eine wässrige Emulsion des mindestens einen ätherischen Öls,
vorliegt.

4. Verwendung gemäß einem der Ansprüche 1 oder 3, oder Verfahren gemäß einem der Ansprüche 2 oder 3, **dadurch gekennzeichnet, dass** das mindestens eine ätherische Öl ausgewählt ist aus der Gruppe bestehend aus acyclischen und cylischen Mono- und Sesquiterpenen, Phenolen, Phenylpropanoiden und Furanocumarinen.

5. Verwendung gemäß einem der Ansprüche 1, 3 oder 4, oder Verfahren gemäß einem der Ansprüche 2 bis 4, **dadurch gekennzeichnet, dass** die Fügeteile unabhängig voneinander jeweils mindestens ein Material enthalten, ausgewählt aus der Gruppe bestehend aus Kunststoffen, organischen Materialien, Holz, Papier, Metallen, sowie mineralischen Stoffen, wie Beton oder Gips und Mischungen davon, bevorzugt unabhängig voneinander jeweils aus mindestens einem der genannten Materialien bestehen.

6. Verwendung gemäß einem der Ansprüche 1 oder 3 bis 5, oder Verfahren gemäß einem der Ansprüche 2 bis 5, **dadurch gekennzeichnet, dass**
im Falle der Ausführungsform i) der eine Klebstoff ein Polyurethanklebstoff, bevorzugt ein Polyestergruppen enthaltender Polyurethanklebstoff ist, bzw. die Klebstoffmischung mindestens einen Polyurethanklebstoff, bevorzugt mindestens einen Polyestergruppen enthaltenden Polyurethanklebstoff, enthält.
im Falle der Ausführungsform ii) wenigstens einer der Klebstoffe ein Polyurethanklebstoff, bevorzugt ein Polyestergruppen enthaltender Polyurethanklebstoff ist, und/oder wenigstens eine der Klebstoffmischungen einen Polyurethanklebstoff, bevorzugt ein Polyestergruppen enthaltender Polyurethanklebstoff, enthält.

7. Verwendung gemäß einem der Ansprüche 1 oder 3 bis 6, oder Verfahren gemäß einem der Ansprüche 2 bis 6, **dadurch gekennzeichnet, dass** zwischen mindestens einem Fügeteil und mindestens einer Klebstoffschicht sich zusätzlich mindestens 1 Vorstrich befindet, bevorzugt ein Silan-basierter Vorstrich und/oder ein Polyurethan-basierter Vorstrich.

8. Verwendung gemäß einem der Ansprüche 1 oder 3 bis 7, oder Verfahren gemäß einem der Ansprüche 2 bis 7, **dadurch gekennzeichnet, dass** mindestens ein die Fügeteile verbindender Klebstoff bzw. eine die Fügeteile verbindende Klebstoffmischung und/oder mindestens ein zusätzlich enthaltender Vorstrich das Trennmedium in verkapselter, bevorzugt mikroverkapselter Form enthält.

9. Verfahren gemäß einem der Ansprüche 2 bis 8, **dadurch gekennzeichnet, dass** die Behandlung der Fügeteileanordnung durch in Kontakt bringen mit dem Trennmedium erfolgt.

10. Verfahren gemäß Anspruch 9, **dadurch gekennzeichnet, dass** die Fügeteileanordnung in das Trennmedium eingebracht wird, und/oder, sofern eine Verkapselung gemäß dem Verfahren nach Anspruch 8 vorliegt, das Trennmedium aus der Verkapselung, bevorzugt durch mechanische Beanspruchung oder Erwärmung, freigesetzt wird.

11. Verfahren gemäß Anspruch 9 oder 10, **dadurch gekennzeichnet, dass** eine thermische Behandlung der mit dem Trennmedium in Kontakt gebrachten Fügeteileanordnung erfolgt.

12. Verfahren gemäß einem der Ansprüche 2 bis 11, **dadurch gekennzeichnet, dass** das Verfahren im kontinuierlichen Betrieb oder im diskontinuierlichen Betrieb durchgeführt wird.

13. Verfahren gemäß einem der Ansprüche 2 bis 12, **dadurch gekennzeichnet, dass** nach der Behandlung mit dem Trennmedium
i) gegebenenfalls Fügeteile, die noch aneinanderhaften, mechanisch voneinander getrennt werden, und
ii) das Trennmittel von den voneinander getrennten Fügeteilen abgetrennt wird, und
iii) gegebenenfalls die voneinander getrennten Fügeteile nach Materialien sortenrein getrennt werden.

14. Fügeteileanordnung, enthaltend oder bestehend aus
a)
i) 2 Fügeteile/n, die durch einen Klebstoff oder eine Klebstoffmischung miteinander verbunden sind,
oder
ii) mehr als 2 Fügeteile/n, die dadurch miteinander verbunden sind, dass sich zwischen 2 benachbarten Fügeteilen jeweils ein Klebstoff oder eine Klebstoffmischung befindet, wobei die jeweils zwischen 2 miteinander verbundenen benachbarten Fügeteilen vorhandenen Klebstoffe bzw. Klebstoffmischungen gleich oder unterschiedlich sein können,
wobei bei Ausführungsform i) und ii) gegebenenfalls zwischen mindestens einem Fügeteil und mindestens einer Klebstoffschicht sich zusätzlich mindestens 1 Vorstrich befindet, bevorzugt ein Silan-basierter Vorstrich und/oder ein Polyurethan-basierter Vorstrich,
b) ein/einem Trennmedium in verkapselter, bevorzugt mikroverkapselter Form,
wobei das verkapselte Trennmedium in mindestens einem die Fügeteile verbindendem Klebstoff bzw. einer die Fügeteile verbindenden Klebstoffmischung und/oder gegebenenfalls in mindestens einem zusätzlich enthaltenen Vorstrich enthalten ist,
und das Trennmedium mindestens ein ätherisches Öl enthält oder aus einem ätherischen Öl besteht.

15. Fügeteileanordnung gemäß Anspruch 14, **dadurch gekennzeichnet, dass** das mindestens eine ätherische Öl ausgewählt ist aus der Gruppe bestehend aus acyclischen und cylischen Mono- und Sesquiterpenen, Phenolen, Phenylpropanoiden und Furanocumarinen.
